# EUROPEAN PATENT SPECIFICATION

(11) **EP 4 320 172 B1**
(45) Date of publication and mention of the grant of the patent: **24.12.2025**
(21) Application number: 22712007.8
(22) Date of filing: 24.03.2022
(51) Int. Cl.: C08F 4/64, C08F 10/02, C08F 2/34

(54) **PRE-POLYMERIZED CATALYST COMPONENTS FOR THE POLYMERIZATION OF OLEFINS**
VORPOLYMERISIERTE KATALYSATORKOMPONENTEN ZUR OLEFINPOLYMERISATION
COMPOSANTS DE CATALYSEUR PRÉ-POLYMÉRISÉS POUR LA POLYMÉRISATION DES OLÉFINES

(30) Priority: 06.04.2021 EP 21166913
(43) Date of publication of application: 14.02.2024
(73) Proprietor: Basell Poliolefine Italia S.r.l., 20121 Milano (IT)
(72) Inventor: LIGUORI, Dario, 44122 Ferrara (IT); DALL'OCCO, Tiziano, 44122 FERRARA (IT); MORINI, Giampiero, 44122 Ferrara (IT); VITALE, Gianni, 44122 Ferrara (IT)
(74) Representative: LyondellBasell
(86) International application number: PCT/EP2022/057811
(87) International publication number: WO 2022/214328

(56) References cited:
- EP-A1- 0 539 937
- EP-A1- 2 816 062
- WO-A1-01/70878

## Description

### FIELD OF THE INVENTION

The present disclosure relates to catalyst components for the preparation of ethylene (co)polymers by using gas-phase, slurry or bulk (co)polymerization processes.

### BACKGROUND OF THE INVENTION

High-yield catalyst components for the polymerization of olefins and in particular for ethylene are known in the art. they are generally obtained by supporting, on a magnesium dihalide, a titanium compound chosen from titanium halides, alkoxide and halo alcoholates. Said catalyst components are then used together with an aluminum alkyl compound in the polymerization of ethylene. These catalyst components, and the catalysts obtained therefrom, are largely used in the plants for the (co)polymerization of ethylene both operating in liquid phase (slurry or bulk) and in gas-phase. However, the use of the catalyst components as such is not completely satisfactory. Indeed, due to the high reactivity of the ethylene, the kinetic of the polymerization reaction is very high. As a consequence, the catalyst is subject to a very strong tension during the initial stage of polymerization which can cause the uncontrolled breakage of the catalyst itself. This event is the cause of the formation of fine particles of polymer, which, in turn, leads to low bulk density of the polymer and to operating process difficulties.

In the attempt to solve these problems, the catalyst is pre-polymerized under controlled conditions, so as to obtain pre-polymerized catalysts purposed to have good morphological stability. In fact, it is believed that after the pre-polymerization, the catalysts increase their resistance in such a way that the tendency to break under polymerization conditions is decreased. When the pre-polymerization is carried out batchwise and not in-line on the polymerization plant, the pre-polymerization conditions are usually particularly mild as reported in WO2013/092282. Although the pre-polymerization according to the cited art improves the performance in terms of morphological stability of the non pre-polymerized catalyst, the performances in the main polymerization step for the production of ethylene polymer are still to be improved in terms of bulk density and percentage of fine particles (diameter lower than 300 µm), particularly for gas phase processes.

Moreover, the preparation of the pre-polymerized catalyst system according to the prior art is burdensome due to the very low productivity. In fact, the low temperature and the low feeding rate of ethylene into the reactor lead to long reaction time and therefore low productivity.

The applicant has now found that when the pre-polymerized catalyst shows specific features in terms nature of ethylene prepolymer the said pre-polymerized catalyst is endowed with high morphological stability which also allows producing less fine particles in the main polymerization step. Moreover, this pre-polymerized catalyst is also obtainable with a more efficient preparation process.

### SUMMARY OF THE INVENTION

It is therefore an object of the present disclosure a pre-polymerized catalyst component for the polymerization of olefins, characterized by comprising (a) a solid catalyst component, comprising Ti, Mg and a halogen and optionally a bidentate electron donor compound (BE) in an amount such that the molar ratio (BE)/Ti ranges from 0 to 0.3, and (b) an amount of an ethylene (co)polymer ranging from 0.1 up to less than 30g per g of said solid catalyst component and being characterized by an intrinsic viscosity, measured in tetraline at 135°C, ranging from 4.5 to 15 dl/g; said pre-polymerized catalyst component also showing a porosity measured by mercury method in the range 0.1 to 1 cm³/g.

### DETAILED DESCRIPTION OF THE INVENTION

The features and the constituents of the pre-polymerized catalyst component are not inextricably linked to each other. This means that a certain level of preference of one the features should not necessarily involve the same level of preference of the remaining features of the same or different constituents. On the contrary, it is intended in the present disclosure that any pre-polymerized catalyst constituent and any preferred range of features of said constituents can be combined with each other and with any possible additional constituents, and preferred feature thereof, described in the present disclosure.

Throughout the present disclosure the term "non-stereospecific solid catalyst component" means a solid catalyst component either as such or in a pre-polymerized form, that gives, under the standard polymerization conditions described in the experimental section, a propylene homopolymer having an insoluble fraction in xylene at 25°C lower than 70%, preferably lower than 65% and more preferably lower than 60%. Solid catalyst components giving, under the same test conditions, an insoluble fraction in xylene at 25°C higher than 70% is considered to be a "stereospecific catalyst".

Preferably, the intrinsic viscosity is in the range 5-12 dl/g.

Preferably, the ethylene (co)polymer is an ethylene homopolymer or an ethylene copolymer containing less than 5% by mol, preferably less than 3% by mol of an alpha-olefin selected from those of formula CH₂=CHR¹, wherein R¹ is a C₁-C₆ linear alkyl group. Preferably, the alpha-olefin is selected from propylene butene-1, hexene-1 and octene-1. More preferably, the ethylene (co)polymer is an ethylene homopolymer.

In a specific embodiment, the amount of ethylene (co)polymer is less than 10g and preferably less than 5g per g of solid catalyst component. In a particularly preferred embodiment, said amount is from 0.5 to 2.5 g per g of solid catalyst component.

Preferably, the pre-polymerized catalyst component has a mercury porosity due to pores radius up to 1 µm ranging from 0.20 to 0.90, more preferably from 0.30 to 0.80 cm³/g.

In addition, the average pore radius associated to the said porosity ranges from 100 to 300 nm preferably from 150 to 280 nm.

Preferably, the pre-polymerized catalyst component has a bulk density ranging from 0.34 to 0.50 g/cm³, more preferably from 0.35 to 0.50 and especially from 0.36 to 0.50 g/cm³.

Preferably the solid catalyst component is non-stereospecific. It preferably comprises a titanium compound and a magnesium dihalide. The magnesium halides, preferably MgCl₂, in active form used as a support for Ziegler-Natta catalysts, are widely known from the patent literature. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is broadened to form a halo.

The preferred titanium compounds used solid catalyst component of the present disclosure are those of formula Ti(OR^{II})_{4-y}X_{y}, where R^{II} is a C₁-C₂₀ hydrocarbon group X is halogen and y is a number between 1 and 4. Particularly preferred compounds are TiCl₄ and Ti-tetraalcoholates or Ti-chloroalcoholates of formula Ti(OR^{III})ₐCl₄₋ₐ where "a" is a number comprised between 1 and 4, and R^{III} is a C₁-C₈ alkyl or aryl group. Preferably R^{III} is selected from ethyl, propyl, n-butyl, isobutyl, 2-ethylhexyl, n-octyl and phenyl.

The titanium compound can be pre-formed, or it is produced in-situ by the reaction of a titanium tetrahalide, in particular TiCl₄, with alcohols R^{II}OH or with titanium alkoxides having the formula Ti(OR^{II})₄ where R^{II} has the meaning defined above.

Preferably, more than 70%, more preferably more than 90% and especially all the titanium atoms of the solid catalyst component before pre-polymerization are in the 4⁺ valence state.

The non-stereospecific solid catalyst components may comprise an electron donor compound (internal donor), selected among ethers, esters, amines and ketones. However, if present, the electron donor compound should either not have stereo regulating ability or be present in such an amount that it does not provide sufficient stereo regulating ability to the catalyst. As a general indication, the electron donors not having stereo regulating ability may be present in a wide range of amounts but preferably to an extent such that their molar ratio to Ti is lower than 10, preferably lower than 7 and more preferably lower than 5. Preferably, bidentate electron donors (BE) are either absent or present in amount such as to give (BE)/Ti ratios from 0 to lower than 0.2 and more preferably from 0 to lower than 0.1. most preferably, bidentate electron donors (BE) are absent.

Among bidentate electron donors preferred are from esters of aliphatic or aromatic dicarboxylic acids such as phthalates, succinates, glutarates, esters of monocarboxylic acids with aliphatic or aromatic diols and 1,3-diethers.

Electron Donors not having stereo regulating ability are preferably monodentate (MD) and are preferably selected from esters of aliphatic or aromatic carboxylic acids such as ethylacetate, benzoates, cyclic alkyl ethers such as tetrahydrofurane. The monodentate donors can be present in an amount such that the (MD):Ti ratio ranges from 0.1:1 to 25:1 preferably from 0.5:1 to 20:1 and especially from 1:1 to 15:1.

In addition to the above mentioned characteristics, the solid catalyst component (a) may show a porosity P_{F} determined with the mercury method ranging from 0.2 to 0.80 cm³/g and more preferably from 0.3 to 0.70 cm³/g more preferably in the range 0.35-0.60 cm³/g.

The surface area measured by the BET method is preferably lower than 80 and in particular comprised between 10 and 70 m²/g. The porosity measured by the BET method is generally comprised between 0.10 and 0.50, preferably from 0.10 to 0.40 cm³/g.

The catalyst components described above can be prepared by a method comprising a step (a) in which a compound MgCl₂.mR^{III}OH, wherein 0.3 ≤ m ≤ 1.7 and R^{III} is an alkyl, cycloalkyl or aryl radical having 1-12 carbon atoms is reacted with the said titanium compound of the formula Ti(OR^{I})ₙX₄₋ₙ, in which n, y, X and R¹ have the same meaning as already defined.

In this case MgCl₂.mR^{III}OH represents a precursor of Mg dihalide. These kind of compounds can be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034. Adducts having the desired final alcohol content can be obtained by directly using the selected amount of alcohol directly during the adduct preparation. However, if adducts with increased porosity are to be obtained, it is possible to first prepare adducts with more than 1.7 moles of alcohol per mole of MgCl₂ and then subjecting them to a thermal and/or chemical dealcoholation process. The thermal dealcoholation process is carried out in nitrogen flow at temperatures comprised between 50 and 150°C until the alcohol content is reduced to the value ranging from 0.3 to 1.7. A process of this type is described in EP 395083.

The dealcoholated adducts are also characterized by a porosity (measured by mercury method ) due to pores with radius due to pores with radius up to 0.1µm ranging from 0.15 to 2.5 cm³/g preferably from 0.25 to 1.5 cm³/g.

In the reaction of step (a) the molar ratio Ti/Mg is stoichiometric or higher; preferably this ratio is higher than 3. Still more preferably a large excess of titanium compound is used. Preferred titanium compounds are titanium tetrahalides, in particular TiCl₄. The reaction with the Ti compound can be carried out by suspending the adduct in cold TiCl₄ (generally 0°C); the mixture is heated up to 80-140°C and kept at this temperature for 0.5-8 preferably from 0.5 to 3 hours. The excess of titanium compound can be separated at high temperatures by filtration or sedimentation and siphoning. The step (a) can be repeated twice or more. In cases of catalysts containing an electron donor compound, this latter can be added together with the titanium compound in the reaction system for reaction with the MgCl₂.mR^{III}OH adduct. However, it can also be first contacted with the adduct alone and then the so formed product reacted with the titanium compound. As an alternative method, the electron donor compound can be added separately in a further step after the completion of the reaction between the adduct and the titanium compound.

The pre-polymerized catalyst component of the present disclosure can be obtained by a comprising pre-polymerizing a solid catalyst component (a) comprising Ti, Mg and a halogen and optionally a bidentate electron donor compound (BE) in an amount such that the molar ratio (BE)/Ti ranges from 0 to 0.3, with ethylene and optionally the alpha olefin CH₂=CHR¹ up to an extent such that the amount of ethylene (co)polymer generated ranges from 0.1 up to 50g per g of said solid catalyst component, said process being carried out at a temperature ranging from 25 to 100°C and in the presence of an Al alkyl compound such that the molar ratio Al/Ti is lower than 0.5.

The process can be carried out in the further presence of an external electron donor compound (C) in such an amount to have a molar ratio (B)/(C) lower than 50, preferably from 0.1 to 20, more preferably from 0.5 to 10 and especially from 0.5 to 8.

The Al-alkyl compound is preferably chosen among the trialkyl aluminum compounds such as for example triethylaluminum, triisobutylaluminum, tri-n-butylaluminum, tri-n-hexylaluminum, tri-n-octylaluminum. Use of tri-n-octylaluminum is particularly preferred. It is also possible to use mixtures of trialkylaluminum's with alkylaluminum halides, alkylaluminum hydrides or alkylaluminum sesquichlorides such as AlEt₂Cl and Al₂Et₃Cl₃.

Preferably, said pre-polymerization using low amounts of alkyl-Al compound. In particular, said amount could be such as to have an Al/Ti molar ratio preferably lower than 0.4 more preferably lower than 0.3 and especially lower than 0.2.

The external electron donor compound can be selected from alcohol, glycols, esters, ketones, amines, amides, nitriles, alkoxysilanes and ethers.

Among alkoxysilanes preferred are those of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane. Also employable are aminosilanes disclosed in EP-A-1538167.

Among ethers preferred are alkoxybenzenes described in WO2011/015553, cyclic alkyl ethers such as tetrahydrofurane, 1,3-diethers such as those described in EP362705 and EP728769.

Preferred esters can be selected from monoesters of aromatic carboxylic acids like benzoates, in particular the C₁-C₁₀ alkyl esters of benzoic acids, and monoesters of aliphatic carboxylic acids like C₁-C₈ alkyl esters of aliphatic mono carboxylic acids, ethylacetate being an example.

Another class of interest is that of C₁-C₁₀ alkyl esters of aromatic dicarboxylic acids like phthalates and C₁-C₁₀ alkyl esters of aliphatic dicarboxylic acids like, malonates, succinates and glutarates. Moreover, also diesters of diols such as those disclosed in USP 7,388,061, and WO2010/078494 can be employed.

Preferred esters are ethylacetate, di-isobutyl phthalate, p-ethoxy-ethylbenzoaoate diethyl 2,3-diisopropylsuccinate

Preferred alcohol are those of formula R³OH in which the R³ group is a C₁-C₂₀ hydrocarbon group. Preferably, R³ is a C₁-C₁₀ alkyl group. Specific examples are methanol, ethanol, isopropanol and butanol.

The pre-polymerization can be carried out in liquid phase, (slurry or solution) or in gas-phase at temperatures ranging from 25 to 100°C, preferably ranging from 30 to 80°C and more preferably ranging from 30 to 70°C. Furthermore, it is preferably carried out in a liquid diluent in particular selected from liquid hydrocarbons. Among them, pentane, hexane and heptane are preferred. The ethylene feeding is preferably higher than 0.08 gC2⁻/gcat/h more preferably ranging from 0.16 gC2⁻/gcat/h to 1.6 gC2⁻/gcat/h.

The particles of the prepolymerized catalyst component have substantially spherical morphology and average diameter comprised between 15 and 200 µm, preferably from 20 to 150 µm and more preferably from 25 to 100µm. As particles having substantially spherical morphology, those are meant wherein the ratio between the greater axis and the smaller axis is equal to or lower than 1.5 and preferably lower than 1.3.

The so obtained prepolymerized catalyst can be used as such in the polymerization or it can be subject to further treatments. Particularly when the solid catalyst component used in the prepolymerization does not contain an internal electron donor, it constitutes a preferred embodiment a prepolymer treatment comprising the supportation of an electron donor on the prepolymer. The electron donor can be chosen among the internal donors already described and may be carried out by contacting the prepolymer and the electron donor in a suitable liquid hydrocarbon medium which is then removed by drying. In the alternative, the electron donor compounds may be contacted with the prepolymer, by subjecting the prepolymer to contact with a gaseous stream containing said the electron donor compound. This technique, which is also applicable to the non-prepolymerized catalyst component is disclosed in PCT/EP2020/081034.

It constitutes a preferred embodiment that the prepolymerized catalyst remains non stereospecific also after the contacting with the electron donor compounds. Preferably, the electron donor is chosen among esters of aliphatic or aromatic carboxylic acids such as ethylacetate and cyclic alkyl ethers such as tetrahydrofurane. More preferably, the electron donor comprises a mixture of the above as described in WO2018/114453.

Additional possible treatments are further reaction with titanium compounds containing at least one Ti-halogen bond, treatments with halogenating agents and treatments with aluminum alkyls.

As explained, the so obtained pre-polymerized catalyst components, which is endowed with a particular combination of donor composition, porosity and intrinsic viscosity, can be used in the (co)polymerization of ethylene, allowing to obtain, with high yields, polymers with regular morphology particularly expressed in terms of high bulk density and low amount fine polymer particles. In particular, in gas-phase polymerization, the fraction of polymer particles having particle size below 500µm and in particular below 300 µm is reduced over the prepolymerized catalyst of the prior art. In a particular embodiment, the fraction of polymer particles having particle size below 500µm is reduced by more than 25%wt and the fraction of polymer particles below 300 µm can be reduced by more than 50% preferably more than 70%. In addition, the prepolymerized catalyst produces in the copolymerization of ethylene with alpha-olefins making possible to produce LLDPE polymers having a low content of xylene soluble fraction in respect of a given polymer density.

In particular, said ethylene (co)polymerization processes can be carried out in the presence of a catalyst comprising (A) the pre-polymerized catalyst component above described and (B) an Al-alkyl compound of the type described above. In the main polymerization process the amount of Al is higher than that used in the pre-polymerization step. Preferably, the Al compound is used in an amount such that the Al/Ti ratio is higher than 1 and is generally comprised between 20 and 800. An external electron donor compound (C) as described above may be used in the ethylene polymerization step.

The catalysts of the present disclosure can be used in any of the olefin polymerization processes known in the art. they can be used for example in slurry polymerization using as diluent an inert hydrocarbon solvent or bulk polymerization using the liquid monomer as a reaction medium. In particular, they are suitably used in the polymerization process carried out in gas-phase. The gas-phase process can be carried out in a fluidized or stirred, fixed bed reactor or in a gas-phase reactor comprising two interconnected polymerization zones one of which, working under fast fluidization conditions and the other in which the polymer flows under the action of gravity. Also, combination of both type of gas-phase reactors can be used. In a preferred embodiment the catalyst is used to polymerize ethylene in a multistep gas-phase process in which the first step is carried out in a fluidized bed gas-phase reactor and the successive step is carried out in a second a gas-phase reactor comprising two interconnected polymerization zones one of which, working under fast fluidization conditions and the other in which the polymer flows under the action of gravity.

Although not mandatory they are primarily directed to be used in polymerization plant set-up not including a pre-polymerization section. In fact, since the catalysts have no aging problems, they can be pre-polymerized in a batch scale and then used in liquid or gas-phase olefin polymerization plants operating without a pre-polymerization line.

As mentioned above, in the main polymerization process the amount of Al is higher than that used in the pre-polymerization. Preferably, the Al compound is used in an amount such that the Al/Ti ratio is higher than 20 and is generally comprised between 50 and 800.

The above described polymerization process can be carried out under the polymerization conditions generally known in the art. Accordingly, the polymerization is generally carried out at a temperature of from 20 to 120°C, preferably of from 40 to 90°C.

In any of the polymerization processes used (liquid or gas-phase polymerization) the catalyst forming components (A) and (B) can be pre-contacted before adding them to the polymerization reactor. The catalyst forming components can be contacted with a liquid inert hydrocarbon solvent such as propane, n-hexane, or n-heptane at a temperature below about 60°C and preferably from about 0°C to 30°C for a time period of from 10 seconds to 60 minutes.

The above process is suitable for the preparation of wide range of polyethylene products. As an example, the following products can be prepared: high density ethylene polymers (HDPE, having a density higher than 0.940 g/cm³), comprising ethylene homopolymers and copolymers of ethylene with α-olefins having 3-12 carbon atoms; linear low density polyethylenes (LLDPE, having a density lower than 0.940 g/cm³) and very low density and ultra low density (VLDPE and ULDPE, having a density lower than 0.920 g/cm³, to 0.880 g/cm³) consisting of copolymers of ethylene with one or more α-olefins having from 3 to 12 carbon atoms, having a mole content of units derived from the ethylene higher than 80%;

The following examples are given in order better illustrate the invention without limiting it.

### CHARACTERIZATION

The properties are determined according to the following methods:

| | |
|---|---|
| **Bulk Density** | ASTM D 1895/96 Method A |
| **MIE flow index:** | ASTM-D 1238 condition E |

**Intrinsic viscosity:** determined in tetrahydronaphthalene at 135°C.

5 g of prepolymerized catalyst are treated under stirring for 30 min. with a mixture comprising water (50 ml), acetone (50 ml) and HCl (20 ml) and then filtered, After washings with water and acetone the residue is dried in oven under vacuum at 70°C for 2 hours.

The so obtained sample is dissolved in tetrahydronaphthalene at 135°C and then the solution is poured into the capillary viscometer. The viscometer tube (Ubbelohde type) is surrounded by a cylindrical glass jacket; this setup allows temperature control with a circulating thermostated liquid. The passage of the meniscus in front of the upper lamp starts the counter which has a quartz crystal oscillator. The meniscus stops the counter as it passes the lower lamp and the efflux time is registered: This is converted into a value of intrinsic viscosity through Huggins' equation, knowing the flow time of the pure solvent at the same experimental conditions (same viscometer and same temperature). One single polymer solution is used to determine [ η ].

### General procedure for the standard propylene polymerization test

A 4 liter steel autoclave equipped with a stirrer, pressure gauge, thermometer, catalyst feeding system, monomer feeding lines and thermostating jacket, was used. The reactor was charged with 0.01 g of solid catalyst component and with 6.6 mmoles of TEAL. Moreover, 1.6 kg of propylene, and 1.5 NL of hydrogen were added. The system was heated to 70°C over 10 min. under stirring, and maintained under these conditions for 120 min. At the end of the polymerization, the polymer was recovered by removing any non-reacted monomers and was dried under vacuum.

2.5 g of the so produced polymer and 250 ml of o-xylene were placed in a roundbottomed flask provided with a cooler and a reflux condenser and kept under nitrogen. The obtained mixture was heated to 135°C and was kept under stirring for about 60 minutes. The final solution was allowed to cool to 0°C under continuous stirring, and the insoluble polymer was then filtered at 0°C. The filtrate was then evaporated in a nitrogen flow at 140°C to reach a constant weight. The content of said xylene-soluble fraction is expressed as a percentage of the original 2.5 grams and then, by difference, the X.I. %.

### General procedure for Gas-Phase Ethylene polymerization (HDPE)

The polymerization was carried out in a 16.0-liter stainless steel fluidized reactor equipped with gas-circulation system, cyclone separator, thermal exchanger, temperature and pressure indicator, feeding line for ethylene, propane, hydrogen and with a 0.6-liter steel reactor for the catalyst injection of the catalytic system into the fluidized bed reactor.

In all the runs the composition of the gas phase within the fluidized bed reactor was as follows: propane (63mol%), ethylene (12mol%) and hydrogen (25mol%) reaching 24 bar of total pressure at 80°C.

In a 100 mL three neck glass flask were introduced in the following order, 20 mL of anhydrous hexane, 0.6 g of TEA, and 0.20 g of the catalyst component. They were stirred together at room temperature for 5 minutes and then introduced in the 0.6-L reactor with 100 g of propane. The reactor was kept at 30°C per 15 min before the introduction of the catalytic system into the fluidized bed reactor. The polymerization tests lasted 2 hours at 80°C. After that time, polymerization was stopped, the polymer discharged, dried and sent to characterization.

### EXAMPLES

### Example 1

### Procedure for the preparation of the spherical support (adduct of MgCl₂/EtOH)

A magnesium chloride and alcohol adduct was prepared following the method described in Example 2 of USP 4,399,054, but working at 2000 RPM instead of 10000 RPM. The adduct containing about 3 mols of alcohol and about 2.5%wt of H₂O and had an average size of about 55 µm. The adduct was subject to a thermal treatment, under nitrogen stream, over a temperature range of 50-150 °C until a weight content of 25% of alcohol was reached.

### Procedure for the preparation of the non stereospecific catalyst component

Into a 2 L reaction vessel, purged with nitrogen, 1 L of TiCl₄ was introduced at 0°C. Then, at the same temperature, 70 grams of a spherical MgCl₂/EtOH adduct containing 25%wt of ethanol, prepared as described above, were added under stirring.

The temperature was raised to 130°C in 2 hours and maintained for 60 min. Then, the stirring was discontinued, the solid product was allowed to settle (in 1h keeping still 130°C) and the supernatant liquid was siphoned off. A volume of fresh TiCl₄ was introduced into the reactor in order to have again 1L of total slurry and the temperature was raised to 130°C under stirring. This temperature was kept for 15' then the stirring was stopped and the solid was allowed to settle (in 1h at 130°C), and the supernatant liquid was siphoned off.

The solid residue was then washed two times with hexane at 50°C and three times at 25°C and dried under vacuum at 30°C and analyzed.

The spherically shaped solid has a magnesium content of 19.0%wt, and an average particle size (P50) of 57 micron.

The intermediate solid component was tested in propylene polymerization, using the general method described here above. The polymer obtained from that test, has a xylene insoluble fraction of 48.1%wt.

### Ethylene Pre-polymerization

Into a 1.5L glass reactor provided with stirrer, 2L of hexane at 30°C and whilst stirring 100g of the catalyst component prepared as described above were introduced at 30°C. Keeping constant the internal temperature, 3.2g of tri-n-octylaluminum (TnOA), premixed in i-hexane with 0.32 g of cyclohexylmethyldimethoxysilane, were slowly introduced into the reactor. After 30 minutes stirring, 110g of ethylene were introduced into the reactor at the temperature of 50°C in 2 hours keeping a constant flow rate. The consumption of ethylene in the reactor was monitored and the monomer feed was discontinued when a theoretical conversion of 1.1g of polymer per g of catalyst was deemed to be reached. The reaction is continued for a further 1h (maturation step) to ensure that all the monomer fed is converted. The prepolymer particles were allowed to settle and washed 2 times with hexane at a temperature of 50°C (60g/L) and 1 time with hexane at r.t and dried under vacuum at 30°C. The prepolymerized catalysts were analyzed in terms of porosity and average molecular weight (intrinsic viscosity). The data regarding the prepolymerization conditions and prepolymer characterization are reported in Table 1. The so obtained pre-polymerized solid catalyst component was employed in the gas phase ethylene polymerization (HDPE), the results of which are reported in table 2.

### Comparative Example C1

The catalyst was prepared according to the procedure described in example 1 but the prepolymerisation process was carried out without the addition of the external electron donor compound, the temperature of the pre-polymerization step was 20°C, TnOA was added in an amount such as to have a Al/Ti molar ratio of 0.5 and 110 grams of ethylene were fed in a total time of three hours. Catalyst composition and characterization is reported also in Table 1. The so obtained pre-polymerized solid catalyst component was employed in the gas phase ethylene polymerization , the results of which are reported in table 2.

### Example 2

The catalyst was prepared according to the procedure described in example 1 with the difference that 1.65 grams of cyclohexylmethyldimethoxysilane were introduced into the reactor and that 110g of ethylene were introduced into the reactor at the temperature of 30°C in 40 minutes keeping a constant flow rate, maintaining the reactor temperature at 30° C for pre-polymerization step. Catalyst composition and characterization is reported also in Table 1. The so obtained pre-polymerized solid catalyst component was employed in the ethylene polymerization according to gas phase procedure, the results of which are reported in table 2.

### Example 3

The catalyst was prepared according to the procedure described in example 2 with the difference that the reactor temperature was at the temperature of 50°C. Catalyst composition and characterization is reported also in Table 1. The so obtained pre-polymerized solid catalyst component was employed in the ethylene polymerization according to gas phase procedure the results of which are reported in table 2.

### Example 4

The catalyst was prepared according to the procedure described in example 2 with the difference that 0.63 grams of THF were used instead of cyclohexylmethyldimethoxysilane. Catalyst composition and characterization is reported also in Table 1. The so obtained pre-polymerized solid catalyst component was employed in the ethylene polymerization according to gas phase procedure, the results of which are reported in table 2.

### Example 5

The catalyst was prepared according to the procedure described in example 2 with the difference that 3.9 grams dioctyl sulfosuccinate sodium salt (DOSS) were used instead of cyclohexylmethyldimethoxysilane. Catalyst composition and characterization is reported also in Table 1. The so obtained pre-polymerized solid catalyst component was employed in the ethylene polymerization according gas phase procedure the results of which are reported in table 2.

### Example 6

The catalyst was prepared according to the procedure described in example 2 with the difference that no external donor was used. Catalyst composition and characterization is reported also in Table 1. The so obtained pre-polymerized solid catalyst component was employed in the ethylene polymerization according to gas phase procedure, the results of which are reported in table 2.

### Example 7

The catalyst was prepared according to the procedure described in example 2 with the difference that 110g of ethylene were introduced into the reactor at the temperature of 30°C in 360 minutes keeping a constant flow rate, maintaining the reactor temperature at 30° C for pre-polymerization step. Catalyst composition and characterization is reported also in Table 1. The so obtained pre-polymerized solid catalyst component was employed in the ethylene polymerization according to gas phase procedure, the results of which are reported in table 2.

**Table 1 - Prepolymerization conditions and characterization.**

| | Pre-polymerization Conditions | | | | Prepolymer characterization | | | | |
|---|---|---|---|---|---|---|---|---|---|
| Cat. Ex. | Al/(Donor (mol) | Al/ Ti | T °C | Time hr | PE/cat g/g | IV dL/g | Porosity cm³/g | APR (nm) | BD g/cm³ |
| 1 | 5.0 | 0.1 | 50 | 2 | 1.1 | 6.06 | 0.43 | 170 | 0.468 |
| 2 | 1.0 | 0.1 | 30 | 0.67 | 1.05 | 8.0 | 0.60 | 208 | 0.392 |
| 3 | 1.0 | 0.1 | 50 | 0.67 | 1.04 | 6.0 | 0.53 | 240 | 0.37 |
| 4 | 1 | 0.1 | 30 | 0.67 | 1.04 | 11.2 | 0.372 | 155 | 0.4 |
| 5 | 1 | 0.1 | 30 | 0.67 | 0.99 | 7.9 | 0.763 | 254 | 0.35 |
| C1 | - | 0.5 | 20 | 3 | 1.1 | 1.9 | 0.70 | 310 | 0.32 |
| 6 | - | 0.1 | 30 | 0.67 | 1.06 | 10.8 | 0.382 | 155 | 0.46 |
| 7 | 1 | 0.1 | 30 | 3 | 1.05 | 8.0 | 0.70 | 350 | 0.390 |

**Table 2 - Gas phase polymerization HDPE**

| Cat. Example | Mil. kg/g | MIE (g/10') | BDP (g/cc) | <500µm % | <300µm % |
|---|---|---|---|---|---|
| 1 | 1.84 | 51.8 | 0.344 | 6.5 | 1.9 |
| 2 | 1.8 | 75.5 | 0.346 | 2.1 | 0.5 |
| 3 | 2.04 | 105 | 0.322 | 3 | 0.9 |
| 4 | 1.6 | 102 | 0.334 | 7.1 | 2.2 |
| 5 | 1.7 | 141 | 0.31 | 4.1 | 0.9 |
| C1 | 1.6 | 79 | 0.302 | 21.2 | 9.0 |
| 6 | 1.4 | 61 | 0.302 | 15 | 5 |
| 7 | 1.9 | 90 | 0.328 | 2.8 | 0.8 |

## Claims

1. A pre-polymerized catalyst component for the polymerization of olefins, **characterized by** comprising (a) a solid catalyst component, comprising Ti, Mg and a halogen and optionally a bidentate electron donor compound (BE) in an amount such that the molar ratio (BE)/Ti ranges from 0 to 0.3, and (b) an amount of an ethylene (co)polymer ranging from 0.1 up to less than 30g per g of said solid catalyst component and being **characterized by** an intrinsic viscosity, measured in tetraline at 135°C, ranging from 4.5 to 15 dl/g; said prepolymerized catalyst component also showing a porosity measured by mercury method in the range 0.1 to 1.0 cm³/g.

2. The pre-polymerized catalyst component according to any of the preceding claims in which the ethylene (co)polymer is an ethylene homopolymer or an ethylene copolymer containing less than 5% mol, preferably less than 3%mol of an alpha-olefin selected from those of formula CH₂=CHR¹, wherein R¹ is a C₁-C₆ linear alkyl group.

3. The pre-polymerized catalyst component according to any of the preceding claims in which the ethylene (co)polymer is an ethylene homopolymer.

4. The pre-polymerized catalyst component according to any of the preceding claims in which the mercury porosity due to pores up to 1 µm ranges from 0.2 to 0.9 cm³/g.

5. The pre-polymerized catalyst component according to any of the preceding claims having has a bulk density ranging from 0.34 to 0.50 g/cm³.

6. The pre-polymerized catalyst component according to any of the preceding claims in which the amount of alpha-olefin (co)polymer is from 0.5 to 2.5 g per g of solid catalyst component.

7. The pre-polymerized catalyst component according to claim 1 in which the magnesium derives from magnesium dichloride and the titanium atoms derive from titanium compounds of formula Ti(OR^{II})_{4-y}X_{y}, where R^{II} is a C₁-C₂₀ hydrocarbon group X is halogen and y is a number between 1 and 4.

8. The pre-polymerized catalyst component according to any of the preceding claims in which the solid catalyst component further comprises one or more monodentate (MD) electron donor compounds selected from esters of aliphatic or aromatic carboxylic acids and cyclic alkyl ethers.

9. The pre-polymerized catalyst component according to any of the preceding claims in which the monodentate donors can be present in an amount such that the (MD):Ti ratio ranges from 0.1:1 to 25:1.

10. A process for the preparation of a pre-polymerized catalyst component comprising pre-polymerizing a solid catalyst component (a) comprising Ti, Mg and a halogen and optionally a bidentate electron donor compound (BE) in an amount such that the molar ratio (BE)/Ti ranges from 0 to 0.3, with ethylene and optionally the alpha olefin CH₂=CHR¹ up to an extent such that the amount of ethylene (co)polymer generated ranges from 0.1 up to 50g per g of said solid catalyst component, said process being carried out at a temperature ranging from 25 to 100°C and in the presence of an Al alkyl compound such that the molar ratio Al/Ti is lower than 0.5.

11. A catalyst system for the polymerization of olefins comprising the product obtained by contacting (A) a pre-polymerized catalyst component according to any of the preceding claims; and (B) an Al-alkyl compound.

12. A process for the (co)polymerization of ethylene **characterized in that** it is carried out in the presence of a catalyst comprising (A) a pre-polymerized catalyst component according to any of the preceding claims; and (B) an Al-alkyl compound.

13. The process for the for the (co)polymerization of ethylene according to claim 12 which is carried out in gas-phase.

## Patentansprüche

1. Vorpolymerisierte Katalysatorkomponente zur Polymerisation von Olefinen, **dadurch gekennzeichnet, dass** sie (a) eine feste Katalysatorkomponente, die Ti, Mg und ein Halogen und gegebenenfalls eine zweizähnige Elektronendonorverbindung (BE) in einer solchen Menge umfasst, dass das molare Verhältnis von (BE)/Ti im Bereich von 0 bis 0,3 liegt, und (b) eine Menge an Ethylen(co)polymer im Bereich von 0,1 bis weniger als 30 g pro g der festen Katalysatorkomponente umfasst, und **gekennzeichnet ist durch** eine Grenzviskosität, gemessen in Tetralin bei 135 °C, im Bereich von 4,5 bis 15 dl/g; wobei die vorpolymerisierte Katalysatorkomponente auch eine Porosität, gemessen nach dem Quecksilberverfahren, im Bereich von 0,1 bis 1,0 cm³/g zeigt.

2. Vorpolymerisierte Katalysatorkomponente nach einem der vorhergehenden Ansprüche, wobei das Ethylen(co)polymer ein Ethylenhomopolymer oder ein Ethylencopolymer ist, das weniger als 5 Mol.%, vorzugsweise weniger als 3 Mol.% eines alpha-Olefins ausgewählt aus jenen mit der Formel CH₂=CHR¹ enthält, wobei R¹ eine lineare C₁-C₆-Alkylgruppe ist.

3. Vorpolymerisierte Katalysatorkomponente nach einem der vorhergehenden Ansprüche, wobei das Ethylen(co)polymer ein Ethylenhomopolymer ist.

4. Vorpolymerisierte Katalysatorkomponente nach einem der vorhergehenden Ansprüche, wobei die Quecksilberporosität durch Poren bis zu 1 µm im Bereich von 0,2 bis 0,9 cm³/g liegt.

5. Vorpolymerisierte Katalysatorkomponente nach einem der vorhergehenden Ansprüche mit einer Schüttdichte im Bereich von 0,34 bis 0,50 g/cm³.

6. Vorpolymerisierte Katalysatorkomponente nach einem der vorhergehenden Ansprüche, wobei die Menge des alpha-Olefin(co)polymers 0,5 bis 2,5 g pro g fester Katalysatorkomponente beträgt.

7. Vorpolymerisierte Katalysatorkomponente nach Anspruch 1, wobei das Magnesium von Magnesiumdichlorid abgeleitet ist und die Titanatome von Titanverbindungen mit der Formel Ti(OR^{II})_{4-y}X_{y} abgeleitet sind, wobei R^{II} eine C₁-C₂₀-Kohlenwasserstoffgruppe ist, X Halogen ist, und y eine Zahl zwischen 1 und 4 ist.

8. Vorpolymerisierte Katalysatorkomponente nach einem der vorhergehenden Ansprüche, wobei die feste Katalysatorkomponente des Weiteren eine oder mehrere einzähnige (MD) Elektronendonorverbindungen ausgewählt aus Estern von aliphatischen oder aromatischen Carbonsäuren und cyclischen Alkylethern umfasst.

9. Vorpolymerisierte Katalysatorkomponente nach einem der vorhergehenden Ansprüche, wobei die einzähnigen Donoren in einer solchen Menge vorhanden sein können, dass (MD):Ti im Bereich von 0,1:1 bis 25:1 liegt.

10. Verfahren zur Herstellung einer vorpolymerisierten Katalysatorkomponente, umfassend Vorpolymerisieren einer festen Katalysatorkomponente (a), die Ti, Mg und ein Halogen und gegebenenfalls eine zweizähnige Elektronendonorverbindung (BE) in einer solchen Menge umfasst, dass das molare Verhältnis von (BE)/Ti im Bereich von 0 bis 0,3 liegt, mit Ethylen und gegebenenfalls dem alpha-Olefin CH₂=CHR¹ bis zu einem solchen Ausmaß, dass die erzeugte Menge an Ethylen(co)polymer im Bereich von 0,1 bis zu 50 g pro g der festen Katalysatorkomponente liegt, wobei das Verfahren bei einer Temperatur im Bereich von 25 bis 100 °C und in Gegenwart einer Al-Alkylverbindung durchgeführt wird, so dass das molare Verhältnis von Al/Ti niedriger als 0,5 ist.

11. Katalysatorsystem zur Polymerisation von Olefinen, umfassend das Produkt, welches durch Kontaktieren von (A) einer vorpolymerisierten Katalysatorkomponente gemäß einem der vorhergehenden Ansprüche; und (B) einer Al-Alkylverbindung erhalten wird.

12. Verfahren zur (Co)polymerisation von Ethylen, **dadurch gekennzeichnet, dass** es in Gegenwart eines Katalysators durchgeführt wird, der (A) eine vorpolymerisierte Katalysatorkomponente gemäß einem der vorhergehenden Ansprüche; und (B) eine Al-Alkylverbindung umfasst.

13. Verfahren zur (Co)polymerisation von Ethylen gemäß Anspruch 12, das in der Gasphase durchgeführt wird.

## Revendications

1. Constituant catalytique prépolymérisé pour la polymérisation d'oléfines, **caractérisé en ce qu'**il comprend (a) un constituant catalytique solide, comprenant Ti, Mg et un halogène et éventuellement un composé donneur d'électrons bidentate (BE) en une quantité telle que le rapport molaire (BE)/Ti est situé dans la plage de 0 à 0,3, et (b) une quantité d'un (co)polymère d'éthylène située dans la plage de 0,1 jusqu'à moins de 30 g par g dudit constituant catalytique solide et étant **caractérisé par** une viscosité intrinsèque, mesurée dans la tétraline à 135° C, située dans la plage de 4,5 à 15 dl/g ; ledit constituant catalytique prépolymérisé présentant également une porosité, mesurée par un procédé au mercure, située dans la plage de 0,1 à 1,0 cm³/g.

2. Constituant catalytique prépolymérisé selon l'une quelconque des revendications précédentes, dans lequel le (co)polymère d'éthylène est un homopolymère d'éthylène ou un copolymère d'éthylène contenant moins de 5 % en mole, de préférence moins de 3 % en mole d'une alpha-oléfine choisie parmi celles de formule CH₂=CHR¹, dans laquelle R¹ représente un groupe alkyle linéaire en C₁-C₆.

3. Constituant catalytique prépolymérisé selon l'une quelconque des revendications précédentes, dans lequel le (co)polymère d'éthylène est un homopolymère d'éthylène.

4. Constituant catalytique prépolymérisé selon l'une quelconque des revendications précédentes, dans lequel la porosité au mercure due aux pores allant jusqu'à 1 µm est située dans la plage de 0,2 à 0,9 cm³/g.

5. Constituant catalytique prépolymérisé selon l'une quelconque des revendications précédentes, présentant une masse volumique apparente située dans la plage de 0,34 à 0,50 g/cm³.

6. Constituant catalytique prépolymérisé selon l'une quelconque des revendications précédentes, dans lequel la quantité de (co)polymère d'alpha-oléfine est de 0,5 à 2,5 g par g de constituant catalytique solide.

7. Constituant catalytique prépolymérisé selon la revendication 1, dans lequel le magnésium est issu du dichlorure de magnésium et les atomes de titane sont issus de composés de titane de formule Ti(OR^{II})_{4-y}X_{y}, où R^{II} représente un groupe hydrocarboné en C₁-C₂₀, X représente halogène et y représente un nombre situé entre 1 et 4.

8. Constituant catalytique prépolymérisé selon l'une quelconque des revendications précédentes, dans lequel le constituant catalytique solide comprend en outre un ou plusieurs composés donneurs d'électrons monodentates (MD) choisis parmi les esters d'acides carboxyliques aliphatiques ou aromatiques et les alkyléthers cycliques.

9. Constituant catalytique prépolymérisé selon l'une quelconque des revendications précédentes, dans lequel les donneurs monodentates peuvent être présents en une quantité telle que le rapport (MD):Ti est situé dans la plage de 0,1:1 à 25:1.

10. Procédé de préparation d'un constituant catalytique prépolymérisé comprenant la prépolymérisation d'un constituant catalytique solide (a) comprenant Ti, Mg et un halogène et éventuellement un composé donneur d'électrons bidentate (BE) en une quantité telle que le rapport molaire (BE)/Ti est situé dans la plage de 0 à 0,3, avec de l'éthylène et éventuellement avec l'alpha-oléfine CH₂=CHR¹ jusqu'à ce que la quantité de (co)polymère d'éthylène générée soit située dans la plage de 0,1 à 50 g par g dudit constituant catalytique solide, ledit procédé étant effectué à une température située dans la plage de 25 à 100° C et en présence d'un composé d'Al-alkyle de telle sorte que le rapport molaire Al/Ti est inférieur à 0,5.

11. Système catalytique pour la polymérisation d'oléfines comprenant le produit obtenu par la mise en contact (A) d'un constituant catalytique prépolymérisé selon l'une quelconque des revendications précédentes ; et (B) d'un composé d'Al-alkyle.

12. Procédé de (co)polymérisation de l'éthylène, **caractérisé en ce qu'**il est effectué en présence d'un catalyseur comprenant (A) un constituant catalytique prépolymérisé selon l'une quelconque des revendications précédentes ; et (B) un composé d'Al-alkyle.

13. Procédé de (co)polymérisation de l'éthylène selon la revendication 12 qui est effectué en phase gazeuse.
